# EUROPÄISCHE PATENTANMELDUNG

(11) **EP 2 172 765 A1**
(43) Veröffentlichungstag der Anmeldung: **07.04.2010**
(21) Anmeldenummer: 09012515.4
(22) Anmeldetag: 02.10.2009
(51) Int. Cl.: G01N 17/04

(54) **Messvorrichtung zur Überwachung der Korrosion einer Stahlarmierung**

(30) Priorität: 04.10.2008 DE 102008050478
(71) Anmelder: Selfsan Consult GmbH, 56154 Boppard (DE)
(72) Erfinder: Hill, Wolfgang, 56154 Boppard-Buchholz (DE)
(74) Vertreter: Grommes, Karl F.

(57) **Zusammenfassung**

Die Erfindung betrifft eine Messvorrichtung (1) zur Überwachung der die Korrosion einer Stahlarmierung (2) in einem Betonteil (3) beeinflussenden Stoffe, wobei die Messvorrichtung (1) einen innerhalb des Betonteiles (3) im Bereich der Stahlarmierung (2) anordbaren Sensor (4) und eine außerhalb des Betonteiles (3) anordbare externe elektronische Auswerteeinrichtung (5) umfasst.

Um eine einfach und robust aufgebaute Messvorrichtung (1) zu erhalten, mit der verlässliche Messwerte über einen Korrosionsverlauf innerhalb eines mit einer Stahlarmierung (2) versehenen Betonteiles (3) gewonnen werden können, schlägt die Erfindung vor, auf der Außenseite der Gehäusewand (8) des Sensors (4) mindestens zwei axial voneinander beabstandete, schleifenförmig um das Gehäuse (6) herumgewickelte drahtförmige Messfühler (9, 9') anzuordnen, die einen unterschiedlichen Abstand von der zu überwachenden Stahlarmierung (2) aufweisen, so dass der zeitliche Verlauf der in Richtung auf die Stahlarmierung (2) fortschreitenden Korrosion von der externen elektronischen Auswerteeinrichtung (5) ermittelbar ist.

## Beschreibung

### Technisches Gebiet

Die Erfindung betrifft eine Messvorrichtung zur Überwachung der die Korrosion einer Stahlarmierung in einem Betonteil beeinflussenden Stoffe.

Eine derartige Messvorrichtung ist aus der DE 20 2006 009 541 U1 bekannt. Sie umfasst einen innerhalb des Betonteiles im Bereich der Stahlarmierung anordbaren Sensor und eine außerhalb des Betonteiles anordbare externe elektronische Auswerteeinrichtung. Dabei weist der Sensor ein Gehäuse aus einem elektrisch nicht leitenden Material auf, auf dessen Gehäusewand außenseitig ein Messfühler angeordnet ist, der aus einem Material besteht, das den Korrosionseigenschaften der Stahlarmierung entspricht. Der Messfühler ist mit einer in dem Gehäuse angeordneten elektronischen Einrichtung verbunden, welche in vorgebbaren zeitlichen Abständen den Korrosionszustand des Messfühlers ermittelt und die Messwerte mit Hilfe einer Sende- und Empfangseinrichtung drahtlos an die externe elektronische Auswerteeinrichtung übermittelt.

Nachteilig ist bei dieser bekannten Messvorrichtung, dass lediglich eine bereits eingetretene Korrosion festgestellt, aber keine Vorhersage über den Verlauf oder die Geschwindigkeit der Korrosion gemacht werden kann.

Aus der DE 38 34 624 A1 ist ebenfalls eine Messvorrichtung zur Überwachung der die Korrosionen einer Stahlarmierung in einem Betonteil beeinflussenden Stoffe bekannt, bei welcher der Sensor im wesentlichen aus zwei im Abstand voneinander angeordneten Messfühlern (Elektroden) besteht. Dabei besteht ein Messfühler aus normalem Betonstahl und ein Messfühler aus einem edleren Metall, das auch in einem karbonisierten oder chloridhaltigen Beton vor Korrosion geschützt ist. Diese Messfühler sind über elektrische Verbindungsleitungen mit der außerhalb des Betonteiles anordbaren Auswerteeinrichtung verbunden, die das Auftreten eines sich zwischen den Messfühlern bei Korrosionsbeginn der Betonstahlelektrode ausbildenden elektrischen Stromes erfasst.

Um den fortschreitenden Verlauf der Korrosionsfront genauer zu bestimmen, wird in dieser Druckschrift vorgeschlagen, die Korrosionsintensität in unterschiedlichen Tiefen der Betonschicht zu messen, wobei in unterschiedlichen Tiefen mehrere voneinander beabstandete, aus Betonstahl bestehende Messfühler angeordnet sind, welche über elektrische Leitungen mit einem nahe der Oberfläche angeordneten Messfühler aus edlerem Metall elektrisch verbunden sind. Damit werden elektrochemische Spannungselemente in verschiedenen Tiefen gebildet, so dass bei Korrosionsbeginn des jeweiligen aus Betonstahl bestehenden Messfühlers der zwischen den Messfühlern sich ausbildende Strom ändert.

Nachteilig bei dieser bekannten Messvorrichtung ist unter anderem, dass die Messleitungen aus der Betonschicht herausgeführt werden müssen und dass die Messwerte nicht nur von den im Beton befindlichen Schadstoffen abhängig sind, sondern ebenso von der Dichte des Betons an den Messpunkten sowie von der dort vorhandenen Temperatur, die daher bei der Auswertung der Messwerte berücksichtigt werden müssen.

### Darstellung der Erfindung

Ausgehend von der DE 20 2006 009 541 U1 liegt der Erfindung die Aufgabe zugrunde, eine einfach und robust aufgebaute Messvorrichtung anzugeben, mit der verlässliche Messwerte über einen Korrosionsverlauf innerhalb eines mit einer Stahlarmierung versehenen Betonteiles gewonnen werden können.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, dass auf der Außenseite der Gehäusewand des Sensors mindestens zwei axial voneinander beabstandete, schleifenförmig um das Gehäuse herumgewickelte drahtförmige Messfühler angeordnet sind, die einen unterschiedlichen Abstand von der zu überwachenden Stahlarmierung aufweisen, so dass der zeitliche Verlauf der in Richtung auf die Stahlarmierung fortschreitenden Korrosion von der externen elektronischen Auswerteeinrichtung ermittelbar ist.

Vorzugsweise ist dabei jedem der beiden Messfühler eine eigene elektronische Einrichtung in dem beispielsweise aus Kunststoff bestehenden Gehäuse des Sensors zugeordnet, welche jeweils mit der externen elektronischen Auswerteeinrichtung drahtlos in Verbindung steht.

Die jeweilige elektronische Einrichtung ist vorteilhafterweise derart aufgebaut, dass bei Erreichen eines vorgegebenen Grenzwertes der Korrosion des jeweiligen Messfühlers die diesem Messfühler zugeordnete elektronische Einrichtung ein Signal an die externe Auswerteeinrichtung sendet. Dabei kann vorgesehen werden, dass der Grenzwert durch die Zerstörung des jeweiligen Messfühlers durch Korrosion definiert wird.

Der Messfühler sollte vorzugsweise aus einem Material bestehen, das den Korrosionseigenschaften der Stahlarmierung in der jeweiligen Schadstoffumgebung entspricht.

Bei der externen elektronischen Auswerteeinrichtung kann es sich um ein tragbares Gerät, insbesondere ein Handlesegerät oder um eine Messstation handeln.

Außerdem können die externe elektronische Auswerteeinrichtung und die elektronischen Einrichtungen des Sensors derart zusammenarbeiten, dass der Korrosionszustand des Messfühlers in vorgegebenen Zeitabständen mittels eines Telemetriesignales abgerufen und an eine Messstation übermittelt wird.

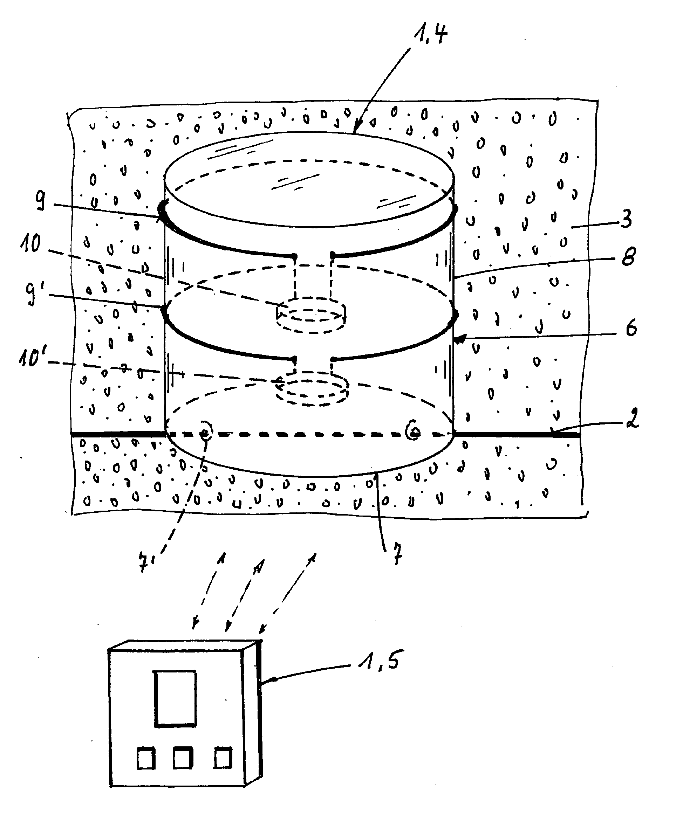

### Kurze Beschreibung der Zeichnung

Weitere Einzelheiten und Vorteile der Erfindung ergeben sich aus dem folgenden, anhand einer Figur erläuterten Ausführungsbeispiel.

In der Figur ist mit 1 eine erfindungsgemäße Messvorrichtung bezeichnet, die zur Überwachung der Korrosion einer Stahlarmierung 2 in einem Betonteil 3 dient. Die Messvorrichtung 1 umfasst einen innerhalb des Betonteiles 3 im Bereich der Stahlarmierung 2 angeordneten Sensor 4 und eine außerhalb des Betonteiles 3 anordbare externe elektronische Auswerteeinrichtung 5. In dem in der Figur dargestellten Ausführungsbeispiel handelt es sich bei der externen Auswerteeinrichtung 5 um ein Handlesegerät, welches die ermittelten Korrosionswerte auf einem Bildschirm darstellt.

Der Sensor 4 umfasst ein aus einem elektrisch nicht leitenden Material, z.B. Kunststoff, bestehendes zylinderförmiges Gehäuse 6, welches mit seiner unteren Stirnseite 7 an der Armierung 2 mittels Drahtklammern 7' befestigt ist.

Auf der Außenseite der Gehäusewand 8 des Sensors 4 sind zwei axial voneinander beabstandete, schleifenförmig um das Gehäuse 6 herumgewickelte drahtförmige Messfühler 9, 9' angeordnet, die einen unterschiedlichen Abstand von der zu überwachenden Stahlarmierung 2 aufweisen, so dass der zeitliche Verlauf der in Richtung auf die Stahlarmierung 2 fortschreitenden Korrosion von der externen elektronischen Auswerteeinrichtung 5 ermittelbar ist.

Dabei bestehen die beiden Messfühler 9, 9' aus einem Material, das den Korrosionseigenschaften der Stahlarmierung 2 in der jeweiligen Schadstoffumgebung entspricht.

Außerdem ist jedem der beiden Messfühler 9, 9' eine eigene elektronische Einrichtung 10, 10' in dem Gehäuse 6 des Sensors 4 zugeordnet, welche mit der externen elektronischen Auswerteeinrichtung 5 drahtlos in Verbindung steht. Dabei sind die beiden elektronischen Einrichtungen 10, 10' derart aufgebaut, dass bei Zerstörung des jeweiligen Messfühlers 9, 9' durch Korrosion die diesem Messfühler 9, 9' zugeordnete elektronische Einrichtung 10, 10' ein Signal an die externe Auswerteeinrichtung 5 sendet.

### Bezugszeichenliste

- 1: Messvorrichtung
- 2: Stahlarmierung
- 3: Betonteil
- 4: Sensor
- 5: (externe) Auswerteeinrichtung
- 6: Gehäuse
- 7: Stirnseite
- 7': Drahtklammer
- 8: Gehäusewand
- 9,9': Messfühler
- 10,10': elektronische Einrichtung

## Patentansprüche

1. Messvorrichtung (1) zur Überwachung der die Korrosion einer Stahlarmierung (2) in einem Betonteil (3) beeinflussenden Stoffe mit den Merkmalen:
a) die Messvorrichtung (1) umfasst einen innerhalb des Betonteiles (3) im Bereich der Stahlarmierung (2) anordbaren Sensor (4) und eine außerhalb des Betonteiles (3) anordbare externe elektronische Auswerteeinrichtung (5);
b) der Sensor (4) weist ein Gehäuse (6) aus einem elektrisch nicht leitenden Material auf, auf dessen Gehäusewand (8) außenseitig mindestens ein Messfühler (9, 9') angeordnet ist, der aus einem Material besteht, das den Korrosionseigenschaften der Stahlarmierung (2) entspricht;
c) der Messfühler (9, 9') ist mit einer in dem Gehäuse (6) angeordneten elektronischen Einrichtung (10, 10') verbunden, welche in vorgebbaren zeitlichen Abständen den Korrosionszustand des Messfühlers (9, 9') ermittelt;
d) die elektronische Einrichtung (10, 10') umfasst eine Sende- und Empfangseinrichtung zur drahtlosen Übertragung des von der elektronischen Einrichtung (10, 10') ermittelten Korrosionszustandes des Messfühlers (9, 9') an die externe elektronische Auswerteeinrichtung (5) sowie zur Ansteuerung der elektronischen Einrichtung (10, 10') durch die externe elektronische Auswerteeinrichtung (5),
**dadurch gekennzeichnet, dass** auf der Außenseite der Gehäusewand (8) des Sensors (4) mindestens zwei axial voneinander beabstandete, schleifenförmig um das Gehäuse (6) herumgewickelte drahtförmige Messfühler (9, 9') angeordnet sind, die einen unterschiedlichen Abstand von der zu überwachenden Stahlarmierung (2) aufweisen, so dass der zeitliche Verlauf der in Richtung auf die Stahlarmierung (2) fortschreitenden Korrosion von der externen elektronischen Auswerteeinrichtung (5) ermittelbar ist.

2. Messvorrichtung nach Anspruch 1, **dadurch gekennzeichnet, dass** jedem der beiden Messfühler (9, 9') eine eigene elektronische Einrichtung (10, 10') in dem Gehäuse (6) des Sensors (4) zugeordnet ist, welche mit der externen elektronischen Auswerteeinrichtung (5) drahtlos in Verbindung steht.

3. Messvorrichtung nach Anspruch 2, **dadurch gekennzeichnet, dass** die elektronischen Einrichtungen (10, 10') derart aufgebaut sind, dass bei Erreichen eines vorgegebenen Grenzwertes der Korrosion des jeweiligen Messfühlers (9, 9') die diesem Messfühler (9, 9') zugeordnete elektronische Einrichtung (10, 10') ein Signal an die externe Auswerteeinrichtung (5) sendet.

4. Messvorrichtung nach Anspruch 2, **dadurch gekennzeichnet, dass** die beiden elektronischen Einrichtungen (10, 10') derart aufgebaut sind, dass bei Zerstörung des jeweiligen Messfühlers (9, 9') durch Korrosion die diesem Messfühler (9, 9') zugeordnete elektronische Einrichtung (10, 10') ein Signal an die externe Auswerteeinrichtung (5) sendet.

5. Messvorrichtung nach einem der Ansprüche 1 bis 4, **dadurch gekennzeichnet, dass** das Gehäuse (6) des Sensors (4) aus Kunststoff besteht.

6. Messvorrichtung nach einem der Ansprüche 1 bis 5, **dadurch gekennzeichnet, dass** das Gehäuse (6) des Sensors (4) zylinderförmig ausgebildet ist.

7. Messvorrichtung nach einem der Ansprüche 1 bis 6, **dadurch gekennzeichnet, dass** der Messfühler (9, 9') aus einem Material besteht, das den Korrosionseigenschaften der Stahlarmierung (2) in der jeweiligen Schadstoffumgebung entspricht.

8. Messvorrichtung nach einem der Ansprüche 1 bis 7, **dadurch gekennzeichnet, dass** es sich bei der externen elektronischen Auswerteeinrichtung (5) um ein tragbares Gerät handelt.

9. Messvorrichtung nach einem der Ansprüche 1 bis 5, **dadurch gekennzeichnet, dass** es sich bei der externen elektronischen Auswerteeinrichtung (5) um eine Messstation handelt.

10. Messvorrichtung nach einem der Ansprüche 1 bis 7, **dadurch gekennzeichnet, dass** die externe elektronische Auswerteeinrichtung (5) und die elektronischen Einrichtungen (10, 10') des Sensors (4) derart zusammenarbeiten, dass der Korrosionszustand des Messfühlers (9, 9') in vorgegebenen Zeitabständen mittels eines Telemetriesignales abgerufen und an eine Messstation übermittelt wird.

11. Verfahren zum Betrieb einer Messvorrichtung nach Anspruch 2, **dadurch gekennzeichnet, dass** bei Erreichen eines vorgegebenen Grenzwertes der Korrosion des jeweiligen Messfühlers (9, 9') von der diesem Messfühler (9, 9') zugeordneten elektronischen Einrichtung (10, 10') ein Signal an die externe Auswerteeinrichtung (5) gesendet wird.

12. Verfahren zum Betrieb einer Messvorrichtung nach Anspruch 2, **dadurch gekennzeichnet, dass** bei Zerstörung des jeweiligen Messfühlers (9, 9') durch Korrosion von der diesem Messfühler (9, 9') zugeordneten elektronischen Einrichtung (10, 10') ein Signal an die externe Auswerteeinrichtung (5) gesendet wird.

13. Verfahren zum Betrieb einer Messvorrichtung nach Anspruch 1 bis 4, **dadurch gekennzeichnet, dass** der Korrosionszustand des Messfühlers (9, 9') in vorgegebenen Zeitabständen mittels eines Telemetriesignales abgerufen und an eine Messstation übermittelt wird.
